# EUROPÄISCHE PATENTANMELDUNG

(11) **EP 4 711 116 A1**
(43) Veröffentlichungstag der Anmeldung: **18.03.2026**
(21) Anmeldenummer: 25202739.6
(22) Anmeldetag: 17.09.2025
(51) Int. Cl.: B29C 64/314, B33Y 70/10

(54) **DOSIERVERFAHREN UND DOSIERVORRICHTUNG ZUR VORBEREITUNG EINES FARBIGEN FERTIGUNGSHARZES**

(30) Priorität: 17.09.2024 AT 507482024
(71) Anmelder: Genera Printer GmbH, 1030 Wien (AT)
(72) Erfinder: GIRRER, Jakob, 1020 Wien (AT); STADLMANN, Klaus, 1020 Wien (AT); ZSOLTAI, Levente, 1160 Wien (AT)
(74) Vertreter: SONN Patentanwälte GmbH & Co KG

(57) **Zusammenfassung**

Dosierverfahren und Dosiervorrichtung zur Vorbereitung eines farbigen Fertigungsharzes (10) aus einem Basisharz (6) und mindestens einem Zusatzmaterial, wobei das Fertigungsharz (10) und das Basisharz (6) Photoharze oder Komponenten von Photoharzen sind, wobei zumindest das mindestens eine Zusatzmaterial in einem ermittelten Verhältnis zu dem Basisharz (6) dosiert wird, wobei eine aus dem ermittelten Verhältnis zu einer ersten Menge des Basisharzes (6) abgeleitete zweite Menge des mindestens einen Zusatzmaterials abgegeben wird, wobei das ermittelte Verhältnis aus einer eingegebenen gewünschten Eigenschaft des prozessierten farbigen Fertigungsharzes (10) ermittelt wird, wobei die eingegebene gewünschte Eigenschaft die Farbe und/oder Transluzenz und/oder Transparenz des prozessierten farbigen Fertigungsharzes (10) ist.

## Beschreibung

Die Erfindung betrifft ein Dosierverfahren zur Vorbereitung eines farbigen Fertigungsharzes aus einem Basisharz und mindestens einem Zusatzmaterial, wobei das Fertigungsharz und das Basisharz Photoharze oder Komponenten von Photoharzen sind, wobei zumindest das mindestens eine Zusatzmaterial in einem ermittelten Verhältnis zu dem Basisharz dosiert wird, wobei eine aus dem ermittelten Verhältnis zu einer ersten Menge des Basisharzes abgeleitete zweite Menge des mindestens einen Zusatzmaterials abgegeben wird, wobei das ermittelte Verhältnis aus einer eingegebenen gewünschten Eigenschaft des prozessierten farbigen Fertigungsharzes ermittelt wird.

Weiters betrifft die Erfindung eine Dosiervorrichtung zur Herstellung eines farbigen Fertigungsharzes, mit mindestens einer Steuerung und zumindest einer von der Steuerung gesteuerten Fördereinrichtung, wobei die Fördereinrichtung mit zumindest einem Anschluss für einen Basisharzbehälter verbunden und eingerichtet ist, das darin enthaltene Photoharz oder die darin enthaltene Komponente eines Photoharzes zu mindestens einem Auslass zu fördern, der zur Mündung in einen Dosierbehälter vorgesehen ist, wobei die Steuerung eingerichtet ist, die Fördereinrichtung zur Förderung einer einem ermittelten Verhältnis eines Basisharzes und mindestens eines Zusatzmaterials entsprechenden Menge anzusteuern.

Der 3D-Druck, auch als additive Fertigung bekannt, ist eine Technologie, bei der dreidimensionale Objekte schichtweise auf Basis digitaler Modelle aufgebaut werden. Es existieren verschiedene 3D-Druckverfahren, wobei die Stereolithografie eine der ältesten und präzisesten Methoden darstellt. Beim Stereolithografie-Verfahren wird ein flüssiges Photoharz durch gezielte Belichtung mit UV-Licht ausgehärtet. Diese Offenbarung betrifft insbesondere Photoharze für die Verwendung in SLA-Verfahren (Stereolithografie unter Einsatz eines Lasers) und/oder DLP-Verfahren (Digital Light Processing; verwendet einen Digitalprojektor, um ein ganzes Schichtbild auf einmal auf die Harzfläche zu projizieren).

Auch die Verwendung farbiger Fertigungsharze auf Basis von Pigmenten oder löslichen Farbstoffen ist bekannt. Farbige Fertigungsharze werden aktuell meist per Hand zubereitet, wobei insbesondere die Dosierung der einzelnen Farbkomponenten eine besondere Herausforderung darstellt, da die Reaktivität bzw. das Aushärteverhalten von Photoharzen durch die Zugabe von Pigmenten oder Farbstoffen verändert wird. Die veränderte Reaktivität kann beispielsweise durch zusätzliche Beimischung oder Veränderung der Dosierung eines Photoinitiators oder durch eine längere Belichtungszeit bei der Aushärtung kompensiert werden. Die Kompensationsparameter müssen dabei für jede neue Farbmischung erneut angepasst werden.

Beim 3D-Druck von Medizinprodukten, wie beispielsweise Brillenrahmen, spielt auch die Biokompatibilität des verwendeten Harzes eine Rolle. Da die Komponenten üblicherweise einzeln auf ihre Biokompatibilität getestet werden, muss beim Mischen darauf geachtet werden, dass die gesundheitlich unbedenkliche Konzentration für keine der (Farb-)Komponenten überschritten wird. Um Gesundheitsschäden zu vermeiden, müssen die Konzentrationen der einzelnen Komponenten überprüfbar sein. Bei der manuellen Zubereitung eines farbigen Fertigungsharzes, insbesondere ohne feste Vorgaben für die Dosierung, können leicht Fehler passieren. Im schlimmsten Fall kann ein Fehler bei der Dosierung von Farbkomponenten zu gesundheitlichen Schäden führen.

Beim 3D-Druck von Markenprodukten können farbliche Abweichungen durch Dosierungsfehler den Wiedererkennungswert der Produkte verfälschen.

In der US 2020/0277503 A1 wird das Anmischen eines farbigen Harzes für die Stereolithographie (SLA) beschrieben. Die Dosierung des Harzes erfolgt dabei manuell.

Die US 11,724,445 B2 offenbart ein Verfahren und eine Vorrichtung zum Abgeben und Mischen verschiedener Komponenten, um ein SLA-Harz mit bestimmten mechanischen Eigenschaften zu erhalten.

Demgegenüber besteht die Aufgabe der vorliegenden Erfindung darin, zumindest einzelne Nachteile des Standes der Technik zu lindern oder zu beseitigen. Die Erfindung setzt sich bevorzugt zum Ziel, die Herstellung eines farbigen Fertigungsharzes mit möglichst exakt reproduzierbaren Eigenschaften, insbesondere mit möglichst exakt reproduzierbarer Farbe und/oder Transluzenz und/oder Transparenz zu ermöglichen oder zumindest zu vereinfachen.

Hierfür sieht die Erfindung ein Dosierverfahren wie in Anspruch 1 und eine Dosiervorrichtung wie in Anspruch 14 definiert vor. Vorteilhafte Ausführungsformen und Weiterbildungen sind in den abhängigen Ansprüchen angegeben.

Beim erfindungsgemäßen Dosierverfahren ist die eingegebene gewünschte Eigenschaft die Farbe und/oder Transluzenz und/oder Transparenz des prozessierten farbigen Fertigungsharzes und/oder des aus dem farbigen Fertigungsharz erzeugten Produkts.

Anhand der eingegebenen gewünschten Eigenschaft kann das Verhältnis der Mengen des verwendeten Basisharzes und der verwendeten Zusatzmaterialien ermittelt werden. Das ermittelte Verhältnis des mindestens einen Zusatzmaterials zu dem Basisharz kann zum Beispiel ein Volumenverhältnis oder ein Massenverhältnis sein.

Das verwendete mindestens eine Zusatzmaterial kann f farbige Pigmente und/oder Farbstoffe enthalten. Durch Mischung des Basisharzes mit verschiedenfarbigen Pigmenten und/oder Farbstoffen kann die Farbe des Fertigungsharzes innerhalb eines durch diese Grundfarben definierten Farbraums eingestellt werden. Die Transparenz und/oder Transluzenz des Fertigungsharzes kann durch Anpassung der Konzentration der Pigmente oder Farbstoffe verändert werden. Vorzugsweise ist zumindest das mindestens eine Zusatzmaterial farbig. Im Allgemeinen kann auch eine Harzmischung als Basisharz oder Zusatzmaterial eingesetzt werden.

Bei einer bevorzugten Ausführungsform ist das Basisharz ein zumindest teilweise transparentes Photoharz. Das Basisharz kann ein farbloses Photoharz sein, welches wenigstens teilweise transparent ist. Das Basisharz kann jedoch auch teilweise opak oder sogar weiß sein. Bei Verwendung eines farblosen Photoharzes als Basisharz können Farbintensität, Transparenz und/oder Transluzenz des Fertigungsharzes eingestellt werden, indem das Verhältnis des mindestens einen Zusatzmaterials zu dem Basisharz variiert wird. Wenn mehrere Photoharze oder Komponenten von Photoharzen verwendet werden, ist im Allgemeinen nicht eingeschränkt, welches Material das Basisharz ist. Insbesondere spielen weder die Reihenfolge der Abgabe noch die Reihenfolge der Zuführung oder die Reihenfolge der Förderung eine Rolle. Wenn beispielsweise zumindest eines der Photoharze farblos ist, kann dieses als "Basisharz" aufgefasst werden.

Bei einer bevorzugten Ausführungsform wird das mindestens eine Zusatzmaterial mit dem Basisharz in Kontakt gebracht. Die Verbindung des Basisharzes mit dem Zusatzmaterial, beispielsweise in einem gemeinsamen Behälter, vermeidet Fehler, die bei einer manuellen Zusammenführung der Materialien auftreten können (z.B., dass einzelne Komponenten bei der Zusammenführung vergessen werden) und erleichtert zudem eine nachfolgende Vermischung. Die in Kontakt gebrachten Materialien können gemeinsam gefördert werden, was die Förderung vereinfacht.

Bei einer bevorzugten Ausführungsform werden mindestens zwei verschiedene Zusatzmaterialien mit dem Basisharz in Kontakt gebracht, wobei jedem der Zusatzmaterialien eine andere Farbe und/oder Transparenz und/oder Reaktivität und/oder Viskosität zugeordnet ist, die das Fertigungsharz beeinflusst, und eine eigene Menge, zum Beispiel die abgeleitete zweite Menge und eine abgeleitete dritte Menge, die von dem jeweiligen Zusatzmaterial mit dem Basisharz in Kontakt gebracht wird. Die Materialien können sich in einer oder mehreren der aufgezählten Eigenschaften unterscheiden und in den übrigen Eigenschaften allenfalls gleichen. Beispielsweise kann die Transparenz mehrerer Zusatzmaterialien Null sein (sie sind opak). Die größere Anzahl an Zusatzmaterialien eröffnet zusätzliche Freiheitsgrade für das herzustellende Fertigungsharz und vergrößert somit wesentlich die Vielfalt der verfügbaren erzielbaren Eigenschaften. Das ist bei Farbmischungen besonders wirkungsvoll und wünschenswert, da typischerweise eine breite Palette von sehr genauen Anforderungen erfüllt werden soll, nicht zuletzt aufgrund der hohen menschlichen Sensibilität bei der Wahrnehmung von Farben und Farbunterschieden oder - abweichungen und der Bedeutung dieser Eigenschaften für manche Produktkategorien, beispielsweise bei Schmuck, Accessoires und Kleidungsstücken.

Bei einer bevorzugten Ausführungsform ist dem Basisharz und dem mindestens einen Zusatzmaterial jeweils eine andere Farbe und/oder Transparenz zugeordnet, die das Fertigungsharz, insbesondere Farbe und/oder Transluzenz und/oder Transparenz des prozessierten Fertigungsharzes, beeinflusst.

So kann beispielsweise auch ein farbiges Basisharz mit mindestens einem farbigen Zusatzmaterial in Kontakt gebracht werden, ohne dass ein transparentes und/oder farbloses Basisharz verwendet wird.

Bei einer besonders bevorzugten Ausführungsform ist das Basisharz wenigstens teilweise transparent und die Zusatzmaterialien sind dafür geeignet, verschiedene Farbtöne nach einem Farbmodell, beispielsweise dem CMYK-Farbmodell, dem RAL-Farbmodell oder dem Pantone-Farbmodell, herzustellen. Die Zusatzmaterialien können jeweils (reaktive oder nicht-reaktive) Konzentrate oder Lösungen bzw. Dispersionen von Farbstoffen und/oder Pigmenten sein.

Anstatt von oder zusätzlich zu Zusatzmaterialien können auch andere Materialien, wie Photoinitiatoren, thermische Initiatoren oder Reinigungslösungen dosiert werden.

Das mindestens eine Zusatzmaterial kann seinerseits ein Photoharz oder eine Komponente eines Photoharzes sein und entspricht quasi einem weiteren Basisharz.

Bei einer bevorzugten Ausführungsform weichen die Härtungsparameter des Basisharzes und des mindestens einen Zusatzmaterials (d.h. der weiteren Basisharze), gemessen anhand der kritischen Energie (E_{c}) und der Penetrationstiefe (Dₚ) bei einer vordefinierten Expositionszeit mit vordefinierter Bestrahlungsstärke (auch Strahlungsflussdichte genannt) und vordefiniertem Lichtspektrum, um weniger als 30 %, insbesondere weniger als 10 %, vorzugsweise weniger als 1 %, voneinander ab. Vorzugsweise wird für die Bestimmung der Härtungsparameter der Basisharze stets dieselbe Lichtquelle verwendet.

Mit der kritischen Energie (E_{c}) und die Penetrationstiefe (Dₚ) lässt sich für ein Photoharz eine Arbeitskurve definieren, an der sich die Durchhärtungstiefe (cure depth, C_{d}) in Abhängigkeit von der Energiezufuhr (exposure) ablesen lässt.

Vorzugsweise enthält jedes Basisharz einen Photoinitiator, der unter Einwirkung von elektromagnetischer Strahlung eine Aushärtungsreaktion des Basisharzes initiiert. Um die Härtungsparameter der unterschiedlichen Basisharze aneinander anzugleichen, kann die Konzentration des Photoinitiators abhängig von den jeweils verwendeten Pigmenten und/oder Farbstoffen in den Basisharzen variiert werden.

Bei Verwendung von Basisharzen mit möglichst ähnlichen Härtungsparametern sind die Druckparameter, insbesondere die Expositionszeit, beim 3D-Druck eines aus diesen Basisharzen hergestellten Fertigungsharzes im Wesentlichen unabhängig von dem ermittelten Verhältnis. Es können also verschiedene Farbmischungen mit denselben Druckparametern gedruckt werden.

Alternativ können Basisharze verwendet werden, deren Härtungsparameter sich stärker unterscheiden, wenn beispielsweise anhand eines mathematischen chemischen Reaktions-Modells (Parametermodel) jede Farbe (CMYK, RAL oder Pantone) und deren unterschiedliche Auswirkungen auf die Härtungsparameter in jedem Mischungsverhältnis simuliert/berechnet oder aus experimentell ermittelten Parametern abgeleitet werden kann. In diesem Fall müssen beim 3D-Druck eines Fertigungsharzes die Druckparameter, insbesondere die Expositionszeit, entsprechend dem mathematischen chemischen Reaktions-Modell angepasst werden. Die Basisharze können dann beispielsweise alle dieselbe Konzentration eines Photoinitiators enthalten.

Bei einer bevorzugten Ausführungsform werden das Basisharz und das mindestens eine Zusatzmaterial zumindest einmalig in einem Kontaktbehälter in Kontakt gebracht, wobei das mindestens eine Zusatzmaterial und/oder das erste Basisharz von einer dem jeweiligen Basisharz zugeordneten steuerbaren Fördereinrichtung in den Kontaktbehälter gefördert wird, wobei die steuerbaren Fördereinrichtungen getrennt angesteuert werden, in Abhängigkeit von einem momentanen Verhältnis.

Eines der Basisharze kann optional bereits im Kontaktbehälter bereitgestellt werden. In diesem Fall kann die Menge des bereits im Kontaktbehälter bereitgestellten Basisharzes als bekannt angenommen oder detektiert werden (z.B. mit einer Waage oder einer optischen Auswertung einer Füllstandsanzeige).

Der Kontaktbehälter kann beispielsweise eine, vorzugsweise nicht-transparente (insbesondere nicht UV durchlässige) oder teilweise transparente (z.B. mit einem Überwachungsfenster für eine Farb-Überwachung), Kartusche sein. Alternativ kann der Kontakt-Behälter die Harz-Wanne eines 3D-Druckers sein. Ein Vorteil einer Kartusche ist, dass eine homogene Durchmischung der Basisharze durch Bewegen, z.B. Schütteln der Kartusche erreicht werden kann. In der Harz-Wanne kann eine Durchmischung - sofern gewünscht - z.B. mit einer Rakel erzielt werden, die durch die Wanne bewegt wird.

Bei einer bevorzugten Ausführungsform ändert sich das momentane Verhältnis dynamisch während der Förderung. Damit kann die Vermischung der Basisharze unterstützt werden. Dies ist insbesondere bei Basisharzen mit hoher Viskosität vorteilhaft. Beispielsweise können die Basisharze abwechselnd jeweils stoßweise in den Kontaktbehälter dosiert werden. Alternativ kann das momentane Verhältnis dem ermittelten Verhältnis entsprechen.

Bei einer alternativen Ausführungsform werden das Basisharz und das mindestens eine Zusatzmaterial jeweils in einen separaten Behälter dosiert, wobei die Materialien erst später, beispielsweise unmittelbar vor dem 3D-Druck-Prozess, miteinander in Kontakt gebracht werden. Dies kann beispielsweise bei Mehrkomponenten-Harzen vorteilhaft sein, um deren unerwünschte vorzeitige Aushärtung zu vermeiden.

Die steuerbaren Fördereinrichtungen können beispielsweise Peristaltikpumpen (Schlauchpumpen), Spritzenpumpen, Membranpumpen, Zahnradpumpen und/oder Druckköpfe (Piezo-Aktuatoren) sein. Vorzugsweise sind die einzelnen Fördereinrichtungen so ausgeführt, dass die Förderung eines Materials die Förderung der anderen Materialien nicht beeinflusst.

Bei der Verwendung von Pumpen als Fördereinrichtungen kann die Förderrichtung der Pumpe am Ende jedes Fördervorgangs für eine kurze Zeit umgedreht werden, um ein Nachtropfen des jeweiligen Materials zu verhindern. Bei der Verwendung von Inkjet-Druckköpfen kann das Tropfen durch eine entsprechende Anpassung der Waveform vermieden werden.

Bei einer bevorzugten Ausführungsform wird der Kontaktbehälter mit einer Markierung markiert, wobei die Markierung eine oder mehrere der folgenden Informationen aufweist oder über eine Datenbank damit verknüpft ist: das vorgegebene Verhältnis, die Applikation, der Zeitpunkt der Herstellung, die genutzten Arten und Anzahl der Basisharze. Auf diese Weise ist es möglich, Daten zu einer bestimmten Rezeptur oder einem einzelnen Batch zu speichern.

Bei einer bevorzugten Ausführungsform wird die Menge an eingesetztem Basisharz und/oder die Menge an eingesetztem mindestens einen Zusatzmaterial mit einem Sensor, insbesondere mit einer Waage und/oder einer Kamera, überwacht.

Alternativ oder zusätzlich kann die Fördermenge via Volumenstrom (z.B. mit einem Durchstromsensor mit Schaufelrad, mit einem kapazitiven Sensor, einem Ultraschall-Sensor oder Sensoren, die einen Differenzdruck oder thermische Veränderungen detektieren, oder mit einem Encoder an einem Motor einer Fördereinrichtung zur Messung der Umdrehungen) überwacht werden.

Unter Heranziehung der (im Allgemeinen bekannten) Dichte der Materialien (Basisharz und Zusatzmaterialien) kann eine Umrechnung des Volumenstroms in einen Massenstrom und umgekehrt durchgeführt werden. So können die gemessenen Werte validiert werden.

Alternativ oder zusätzlich kann die Farbe des Erzeugnisses optisch überwacht werden. Dazu kann z.B. ein optischer Sensor benachbart einer transparenten Leitung angeordnet sein, durch die das bereits gemischte Fertigungsharz gefördert wird. Optional kann eine Lichtquelle, z.B. auf der gegenüberliegenden Seite der Leitung, angeordnet sein, die das geförderte Fertigungsharz beleuchtet oder durchleuchtet. Die Lichtquelle kann einen (optional steuerbaren) Filter aufweisen. Der Filter kann beispielsweise sicherstellen, dass das Lichtspektrum chemische Reaktionen im Fertigungsharz vermeidet; oder er kann spezifisch nur die erwartete Farbe des Fertigungsharzes durchlassen, sodass der optische Sensor auf Basis der Intensität des durchgelassenen Lichts eine Übereinstimmung mit der tatsächlichen Farbe ermitteln kann. Alternativ kann die Lichtquelle eine einstellbare Farbe haben, für eine vergleichbare Anwendung.

Bei einer bevorzugten Ausführungsform wird das zumindest eine Zusatzmaterial seinerseits aus einem Zusatz-Basisharz und mindestens einem Zusatzkonzentrat hergestellt, wobei das Zusatz-Basisharz und das Zusatzkonzentrat in einem vorgegebenen Zusatz-Verhältnis dosiert werden.

Das Zusatz-Basisharz kann das gleiche Material sein, wie das Basisharz. Das Zusatzkonzentrat kann eine Lösung oder eine Dispersion eines farbigen Pigments oder eines Farbstoffs sein, welche mit dem Zusatz-Basisharz verdünnt wurde.

Das Zusatz-Verhältnis kann beispielsweise in Abhängigkeit von einer bekannten Genauigkeit der dem Zusatzmaterial zugeordneten Fördereinrichtung bestimmt werden. Einer Ungenauigkeit der Fördereinrichtung kann mit einem höheren Verdünnungsverhältnis der Pigmente oder Farbstoffe begegnet werden, um trotzdem reproduzierbare Farbmischungen zu erhalten. Je stärker das Zusatzkonzentrat verdünnt wird, desto weniger wirkt sich eine gegebene Abweichung der Förderrate auf die Eigenschaften des Fertigungsharzes aus.

Das Zusatz-Basisharz und das Zusatzkonzentrat können optional getrennt voneinander in verschiedene Behälter (z.B. verschiedene Kartuschen, oder in einen Abtropfbehälter und eine oder mehrere Kartuschen) dosiert werden, sodass diese Harze erst unmittelbar vor dem Druck in Kontakt gebracht werden können, was insbesondere bei 2-Komponenten-Harzen vorteilhaft ist.

Bei einer bevorzugten Ausführungsform wird das ermittelte Verhältnis mit einem Grenzwert verglichen und bei Überschreitung des Grenzwerts das Verfahren abgebrochen. Der Grenzwert kann beispielsweise durch die Auswirkungen mindestens eines der Basisharze auf Biokompatibilität, Druckbarkeit und/oder mechanische Parameter des prozessierten Fertigungsharzes vorgegeben werden. Beispielsweise können bestimmte Farbpigmente oder Farbstoffe in hohen Konzentrationen die Hautverträglichkeit und/oder die mechanische Stabilität eines aus dem Fertigungsharz gedruckten Bauteils beeinträchtigen.

Bei einer bevorzugten Ausführungsform werden das Basisharz und das mindestens eine Zusatzmaterial während der Förderung gemischt, vorzugsweise durch Schütteln, Rühren oder Verwirbeln. Optional werden das Basisharz und das mindestens eine Zusatzmaterial dabei zumindest vorübergehend in anderen Verhältnissen als dem ermittelten Verhältnis gemischt.

Das Mischen kann beispielsweise durch einen Exzenter, erfolgen, welcher sich unter dem Kontaktbehälter befindet und diesen schüttelt. Alternativ kann der Kontaktbehälter manuell geschüttelt werden.

Alternativ kann das Mischen durch einen Rotor oder Rührer erfolgen, welcher sich in dem Kontaktbehälter oder in der Dosiervorrichtung befinden kann. Der Rührer kann auch ein Magnetrührer sein, welcher sich außerhalb des Kontaktbehälters befindet und einen innerhalb des Kontaktbehälters befindlichen Magnetrührstab in Rotation versetzt. Es kann auch ein statischer Mischer im Kontaktbehälter vorgesehen sein, z.B. ein Helix-Mischer.

Jeder Auslass der Dosiervorrichtung kann einen Dosierkopf aufweisen. Der Dosierkopf ist vorzugsweise so geformt, dass ein Tropfen der Basisharze vermieden wird.

Das Mischen der Materialien kann auch durch eine Mischdüse erfolgen. Die Mischdüse kann sich in dem Dosierkopf befinden. Die Mischdüse und/oder der Dosierkopf können austauschbare Komponenten sein. Die Mischdüse und/oder der Dosierkopf können per 3D-Druck herstellbar sein. Die Mischdüse kann insbesondere bei mehr als zwei Basisharzen vorteilhaft sein, um eine parallele Vermischung sämtlicher Basisharze zu erreichen. Die Leitungsquerschnitte, sowie die Form und Strömungsführung der Mischdüse können dabei an die im allgemeinen unterschiedlichen Viskositäten der Basisharze, insbesondere des Basisharzen im Vergleich zu den Zusatzmaterialien, angepasst sein. Beispielsweise kann der Leitungsquerschnitt oder Mündungsquerschnitt für das Basisharz größer sein als jener für die einzelnen Zusatzmaterialien.

In dem Kontaktbehälter kann sich eine Kugel befinden, welche beim Schütteln die Durchmischung der Materialien verbessert.

Um Wiederholungen aus dem Beschreibungsteil betreffend das Dosierverfahren zu vermeiden, wird hinsichtlich der Beschreibung der Dosiervorrichtung auch auf die vorangegangene Beschreibung des Dosierverfahrens verwiesen, soweit diese auf die Dosiervorrichtung anwendbar ist.

Die Steuerung der erfindungsgemäßen Dosiervorrichtung ist eingerichtet, das ermittelte Verhältnis aus einer eingegebenen gewünschten Eigenschaft des prozessierten farbigen Fertigungsharzes zu ermitteln, wobei die eingegebene gewünschte Eigenschaft die Farbe und/oder Transluzenz und/oder Transparenz des prozessierten farbigen Fertigungsharzes ist. Die Eingabe kann manuell, z.B. über ein Bedienfeld, oder elektronisch, z.B. über eine elektronische Schnittstelle oder einen Datenträger, erfolgen.

Die Steuerung der Dosiervorrichtung ist vorzugsweise elektronisch.

Bei einer bevorzugten Ausführungsform ist mindestens eine weitere von der Steuerung gesteuerte Fördereinrichtung vorgesehen, wobei die weitere Fördereinrichtung mit einem Anschluss für einen Zusatzmaterialbehälter verbunden und eingerichtet ist, das darin enthaltene Material zu dem Auslass oder zu einem weiteren Auslass zu fördern, der zur Mündung in den Dosierbehälter vorgesehen ist, wobei die Steuerung eingerichtet ist, die weitere Fördereinrichtung zur Förderung einer dem ermittelten Verhältnis entsprechenden Menge anzusteuern.

Vorzugsweise befinden sich die Zusatzmaterialbehälter unter einer Blende oder einem Deckel, sodass sie vor Licht geschützt sind. Die Zusatzmaterialbehälter sind vorzugsweise selbst lichtundurchlässig.

Bei einer bevorzugten Ausführungsform ist eine Messeinheit (ein Sensor) vorgesehen, die mit der Steuerung verbunden und eingerichtet ist, die geförderte Materialmenge zu ermitteln und die ermittelte Materialmenge an die Steuerung zu übermitteln, wobei die Steuerung eingerichtet ist, die Fördereinrichtung in Abhängigkeit von der übermittelten Materialmenge zu steuern.

Die Messeinheit kann eine Waage aufweisen, welche das Gewicht des Dosierbehälters misst. So kann einerseits festgestellt werden, ob der Dosierbehälter zu Beginn eines Dosiervorgangs leer ist bzw. wie viel Harz sich bereits in dem Dosierbehälter befindet. Andererseits kann über das Gewicht des Dosierbehälters die geförderte Materialmenge gesteuert oder geregelt werden.

Die Messeinheit kann beispielsweise feststellen, ob die Kartusche bereits mit (transparentem) Basisharz gefüllt ist. Wenn ja, werden nur mehr die entsprechenden Zusatzmaterialien dazu dosiert, um die gewünschte Farbe zu erhalten.

Bei einer bevorzugten Ausführungsform ist eine elektronische Schnittstelle zur Übermittlung von Daten zu den Basisharzen, wie Farbe, Eigenschaften, Zulassung, Zeit-Informationen oder des damit erzeugten Produkts sowie entsprechende Metadaten vorgesehen, wobei die elektronische Schnittstelle mit der Steuerung verbunden ist und die Steuerung eingerichtet ist, die über die elektronische Schnittstelle empfangenen Daten zu dem Basisharz und optional zu dem mindestens einen Zusatzmaterial beim Ansteuern der Fördereinrichtung zu berücksichtigen und/oder daraus abgeleitete Daten zu dem Fertigungsharz über die elektronische Schnittstelle bereitzustellen.

Bei einer bevorzugten Ausführungsform ist ein Schreib-/Lesegerät für kontaktlos programmierbare und kontaktlos auslesbare Etiketten (NFC) zur Übermittlung von Daten zum Basisharz und/oder zum mindestens einen Zusatzmaterial und/oder zu dem damit herstellbaren Fertigungsharz vorgesehen.

Bei einer bevorzugten Ausführungsform weist die Dosiervorrichtung einen oder mehrere optische Scanner zur Übermittlung von Daten zum Basisharz oder zu mindestens einem Zusatzmaterial auf.

Bei einer bevorzugten Ausführungsform ist ein Etikettendrucker zur Übermittlung von Daten zum herstellbaren Fertigungsharz vorgesehen.

Bei einer bevorzugten Ausführungsform ist eine Schnittstelle zur Übertragung von Daten über das herstellbare Fertigungsharz gemäß den oben definierten technischen Möglichkeiten vorgesehen, mit dem Zweck, den weiteren Verarbeitungsprozess des Fertigungsharzes zu parametrisieren.

Die Schnittstelle kann zum Beispiel eine entsprechende Datenschnittstelle sein, die Daten mit einem PC und/oder einem Drucksystem austauscht.

Die Dosiervorrichtung kann eine Zeitmesseinheit aufweisen, die dazu eingerichtet ist, die Standzeit der Basisharze in der Dosiervorrichtung zu messen. Der Nutzer kann nach einer gewissen Standzeit aufgefordert werden, die Basisharzbehälter zu schütteln.

Die Dosiervorrichtung kann eine Füllstandsmesseinheit aufweisen, die dazu eingerichtet ist, den Füllstand der Zusatzmaterialbehälter zu überwachen. Die Füllstandsmesseinheit kann beispielsweise das Gewicht der Zusatzmaterialbehälter und der darin befindlichen Zusatzmaterialien messen.

Die Dosiervorrichtung kann eine Temperaturmesseinheit und/oder eine Temperierung (z.B. in Form einer Heiz- und/oder Kühleinheit) aufweisen.

Die Dosiervorrichtung kann eine Kippwinkelmesseinheit aufweisen, die dazu eingerichtet ist, den Kippwinkel der Dosiervorrichtung zu messen. Damit kann überprüft werden, ob die Dosiervorrichtung bei einem Dosiervorgang gerade steht, um ein Überlaufen des Dosierbehälters zu vermeiden.

Die Dosiervorrichtung kann eine Bedieneinheit aufweisen, welche vorzugsweise einen Touchscreen enthält.

Die Dosiervorrichtung kann eine Dosierbehälterlade aufweisen, in welche ein Dosierbehälter gestellt werden kann, um diesen mit Harz zu füllen. Die Dosiervorrichtung kann dazu eingerichtet sein, festzustellen, ob die Dosierbehälterlade geschlossen ist und ob sich ein Dosierbehälter in der Dosierbehälterlade befindet.

Die Dosiervorrichtung kann eine Farbmesseinheit aufweisen, die die Farbe der dosierten und/oder vermischten Materialien, oder des Fertigungsharzes misst. Dafür kann beispielsweise Harz auf eine Glasplatte dosiert werden und Farbmessgerät misst die Farbe des Harzes. Die Erfindung betrifft ebenso ein Kalibrierverfahren, bei dem auf Basis zumindest eines vorgegebenen Rezepts einer Referenzfarbe und ihrer vom Farbmessgerät ermittelten Farbe die Dosiervorrichtung kalibriert wird. Beispielsweise können Betriebsparameter etwaiger Dosierpumpen (wie z.B. Fördervolumen pro Hub/Zeit, Vorlauf, Nachlauf) auf diese Weise kalibriert werden. Bei mehreren Dosierpumpen können entsprechend mehrere verschiedene Referenzfarben eingesetzt werden, um die Wirkung der einzelnen Pumpen möglichst unterscheiden zu können.

Die Dosiervorrichtung kann dazu eingerichtet sein, die Nutzungsdauer und/oder den Widerstand des Dosierkopfs und/oder der Mischdüse zu überwachen. Der Nutzer kann dazu aufgefordert werden, nach einer bestimmten Nutzungsdauer und/oder bei einem bestimmten Widerstand den Dosierkopf und/oder die Mischdüse zu tauschen, oder eine Reinigung durchzuführen. Zur Reinigung kann beispielsweise eine Reinigungslösung durch den Dosierkopf und/oder die Mischdüse dosiert werden. Der Dosierkopf und/oder die Mischdüse können eine elektronische Schnittstelle (z.B. RFID oder NFC) aufweisen, über welche Daten zu Nutzungsdauer, Art und Einsatzbereich des Dosierkopfs und/oder der Mischdüse zwischen Dosierkopf und/oder Mischdüse und Dosiervorrichtung übertragen und/oder gespeichert werden können.

Die Zusatzmaterialien können auch Effektlacke, wie beispielsweise Metallic-Lacke, enthalten.

Es kann auch ein Dosierbehälter mit zwei oder mehr Kammern eingesetzt werden, in welche jeweils unterschiedliche Basisharze, Zusatzmaterialien oder Fertigungsharze dosiert werden, welche dann für mehrfarbigen 3D-Druck einsetzbar sind. Ein solcher Dosierbehälter kann beispielsweise durch zwei Dosierköpfe gleichzeitig befüllt werden. Alternativ können die Kammern des Dosierbehälters mit einem beweglichen Dosierkopf nacheinander befüllt werden.

Die Dosiervorrichtung kann dazu eingerichtet sein, ein Reinigungsmittel in einen Dosierbehälter zu dosieren. Der Nutzer kann dann aufgefordert werden, den Dosierbehälter mit dem Reinigungsmittel zu schütteln und/oder dieses zu entsorgen. So kann ein Dosierbehälter mehrmals verwendet werden. Informationen zu dem durchgeführten Reinigungsvorgang können über eine elektronische Schnittstelle (z.B. RFID oder NFC) zwischen Dosiervorrichtung und Dosierbehälter übertragen werden. Das Reinigungsmittel kann in einem der Basisharzbehälter oder Zusatzmaterialbehälter vorgesehen sein. Das Reinigungsmittel kann auch dafür geeignet sein, den Dosierkopf und/oder die Mischdüse zu reinigen.

Die Dosiervorrichtung kann dazu eingerichtet sein, den Dosierkopf und/oder die Mischdüse mit Druckluft zu reinigen.

Vorzugsweise ist der Mischkopf vor Licht geschützt, um die Aushärtung von Harzen im Mischkopf zu reduzieren oder zu vermeiden.

Die Dosiervorrichtung kann dazu eingerichtet sein, dass damit nur die Befüllung autorisierter Dosierbehälter möglich ist. Zur Feststellung, ob sich ein autorisierter Dosierbehälter in der Dosiervorrichtung befindet, können Daten über eine elektronische Schnittstelle (z.B. RFID oder NFC) zwischen Dosiervorrichtung und Dosierbehälter übertragen werden. Beispielsweise kann der Dosierbehälter anhand einer digitalen Kennung oder anhand eines kryptografischen Zertifikats authentifiziert und in weiterer Folge autorisiert werden.

Die Erfindung wird im Folgenden anhand von bevorzugten, nicht einschränkenden Ausführungsbeispielen unter Bezugnahme auf die Zeichnungen noch weiter erläutert.
Fig. 1 zeigt schematisch den Aufbau einer erfindungsgemäßen Dosiervorrichtung mit allen Leitungen zur Förderung der dosierten Materialien.
Fig. 2 zeigt schematisch die elektronische Verschaltung der Dosiervorrichtung aus Fig. 1.
Fig. 3 zeigt schematisch die räumliche Aufteilung der Dosiervorrichtung aus Fig. 1.
Fig. 4a zeigt eine Seitenansicht der Dosiervorrichtung aus Fig. 1.
Fig. 4b zeigt eine Seitenansicht der Dosiervorrichtung aus Fig. 1 mit geöffneter Mischkartuschenlade und geöffnetem Deckel des Farbkartuschenfachs, sowie eine Mischkartusche und eine Farbkartusche.
Fig. 5 zeigt eine Seitenansicht eines Dosierkopfs; Fig. 6A-C zeigen Schnitte des Dosierkopfs entlang der Linien A-A, B-B bzw. C-C in Fig. 5; Fig 7 zeigt eine schaubildliche Ansicht des Dosierkopfs gemäß Fig. 5.

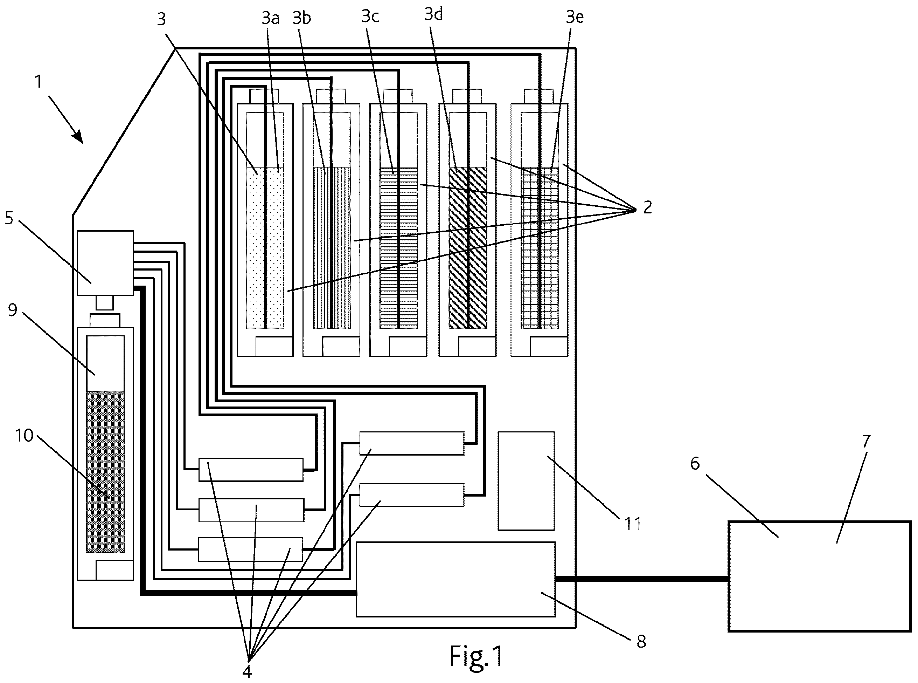

Wie in Fig. 1 ersichtlich, enthält die Dosiervorrichtung 1 fünf Farbkartuschen 2, welche mit farbigen Basisharzen 3 in den Farben cyan 3a, magenta 3b, gelb 3c, schwarz 3d und weiß 3e gefüllt sind. Diese farbigen Basisharze bilden die Zusatzmaterialien und die Farbkartuschen die Zusatzmaterialbehälter. Für jede Farbe sind jeweils separate kleine Schlauchpumpen 4 vorgesehen, welche die farbigen Basisharze 3 jeweils einzeln zu dem Dosierkopf 5 fördern können. Transparentes Basisharz 6 wird in einem externen Behälter 7 bereitgestellt und kann über eine große Schlauchpumpe 8 zu dem Dosierkopf 5 gefördert werden. Über den Dosierkopf 5 können die farbigen Basisharze 3 und das transparente Basisharz 6 in eine Mischkartusche 9 dosiert werden. Die Mischkartusche 9 bildet in diesem Beispiel den Dosierbehälter und zugleich auch den Kontaktbehälter. Aus dem transparenten Basisharz 6 und den farbigen Basisharzen 3 wird in der Mischkartusche 9 ein Fertigungsharz 10 hergestellt, welches nach dem Dosiervorgang noch, beispielsweise durch manuelles Schütteln der Mischkartusche 9, gemischt wird. Die farbigen Basisharze 3 enthalten vorzugsweise lösliche Farbstoffe, können aber auch Pigmente enthalten. Die farbigen Basisharze 3 können beispielsweise zu 99 % aus dem transparenten Basisharz 6 bestehen und 1 % einer konzentrierten Color-Basis enthalten. Der Anteil der Color-Basis in den farbigen Basisharzen hängt von der Genauigkeit der kleinen Schlauchpumpen 4 ab. Je ungenauer die kleinen Schlauchpumpen 4, desto höher muss die Color-Basis verdünnt werden. Im Fall ausreichend genauer Schlauchpumpen könnte anstelle der farbigen Basisharze direkt die konzentrierte Color-Basis als Zusatzmaterial verwendet werden. Die Farbkartuschen 2 und der externe Behälter 7 sind lichtundurchlässig, um ein unerwünschtes Aushärten der Basisharze 3, 6 zu vermeiden.

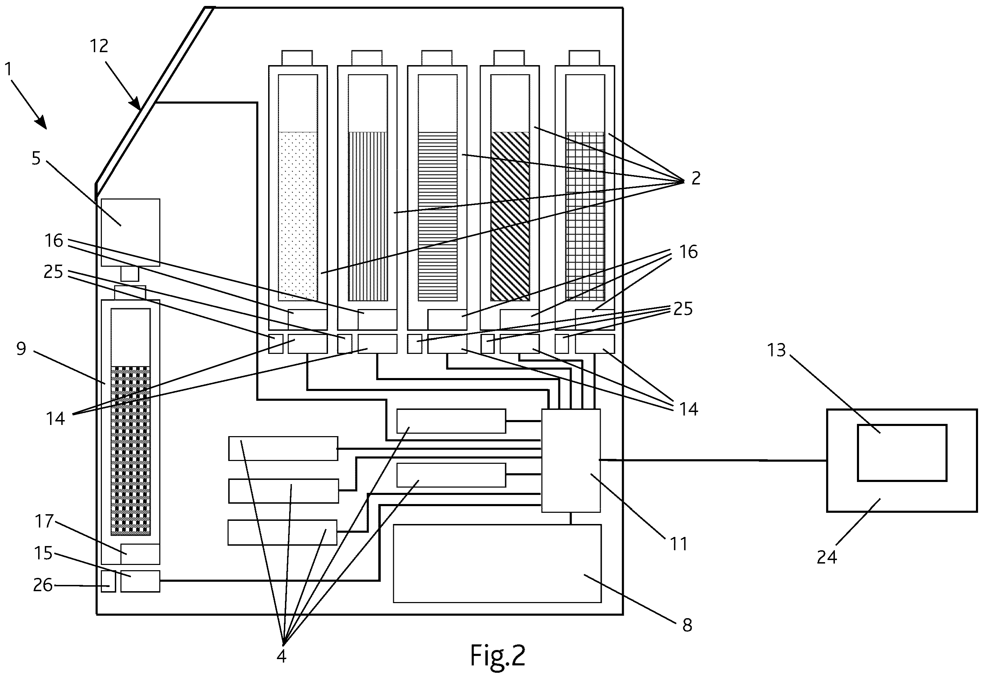

Die Steuerung der Dosiervorrichtung 1 kann anhand von Fig. 2 nachvollzogen werden. Die Bedienung durch einen Benutzer findet über eine Bedieneinheit 12 statt, welche einen Touchscreen als Ein- und Ausgabegerät enthält. Die Steuerung der Dosiervorrichtung 1 erfolgt über eine Steuersoftware 13 auf einem Steuerungs-Rechner (z.B. PC oder Laptop) 24. Die Farbkartuschen 2 sind jeweils mit NFC-Tags 16 versehen, ebenso ist die Mischkartusche 9 mit einem NFC-Tag 17 versehen. Unterhalb der Farbkartuschen 2 sind jeweils NFC-Schnittstellen 14 vorgesehen, die Informationen von den NFC-Tags 16 der Farbkartuschen 2 auslesen, sowie die NFC-Tags 16 der Farbkartuschen mit Informationen beschreiben können. Unterhalb der Mischkartusche 9 ist eine NFC-Schnittstelle 15 vorgesehen, die Informationen von den NFC-Tag 17 der Mischkartusche 9 auslesen, sowie den NFC-Tag 17 der Mischkartusche 9 mit Informationen beschreiben kann. Die Schlauchpumpen 4, 8, die Bedieneinheit 12, sowie die NFC-Schnittstellen 14, 15 sind mit einem Mainboard 11 elektronisch verbunden, sodass ein Informationsaustausch zwischen den genannten Komponenten und dem Mainboard 11 stattfinden kann, auf welchem sich eine Recheneinheit befindet.

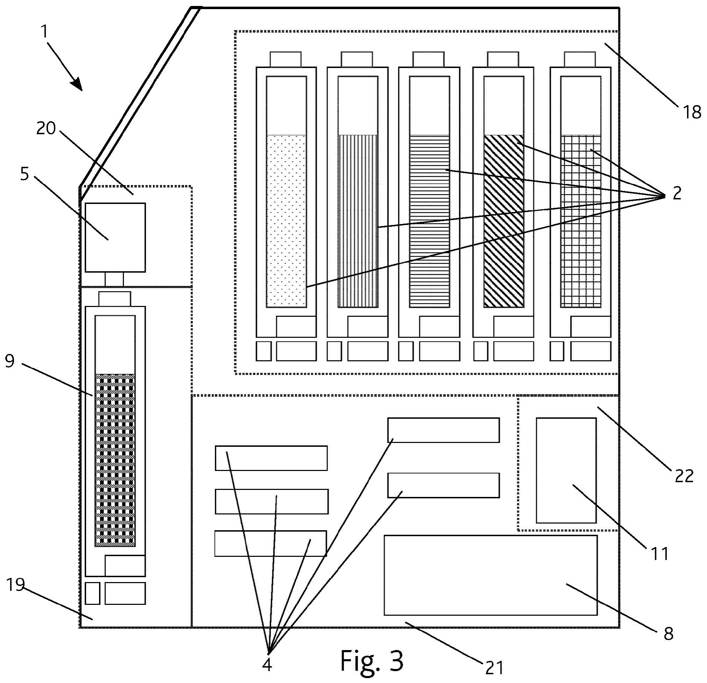

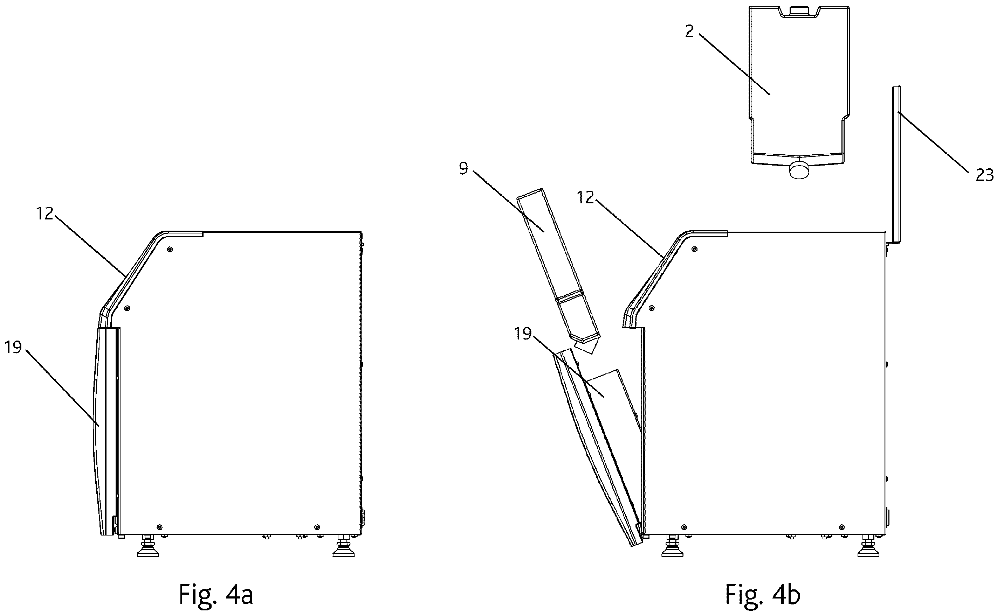

Wie in Fig. 3 ersichtlich, befinden sich die Farbkartuschen 2 in einem Farbkartuschenfach 18. Die Mischkartusche 9 befindet sich in einer Mischkartuschenlade 19 (zugleich Dosierbehälterlade), welche zum Entnehmen und Einsetzen der Mischkartusche 9 herausgeklappt werden kann, wie in Fig. 4b ersichtlich. Der Dosierkopf 5 befindet sich in einem Dosierfach 20, welches von der Mischkartuschenlade 19 mittels einer federbelasteten Barriere getrennt ist, um ein Verschütten der zu dosierenden Materialien zu verhindern. Die Schlauchpumpen 4, 8 befinden sich in einem Pumpenfach 21. Das Mainboard 11 befindet sich in einem Elektronikfach 22, das von den übrigen Fächern, durch welche die Basisharze gefördert werden, getrennt ist. Das Farbkartuschenfach 18 kann zum Schutz der farbigen Basisharze 3 vor Licht mit einem Deckel 23 verschlossen werden, welcher in Fig. 4b gezeigt ist.

Zur Herstellung eines Fertigungsharzes 10 mit einer bestimmten Farbe und Transluzenz werden vom Benutzer die folgenden Schritte durchgeführt:
1.) Der Benutzer wählt die gewünschte Farbe (anhand eines Pantone Code, CMYK Code oder dergleichen) und die gewünschte Transluzenz auf der Bedieneinheit 12 aus oder der NFC-Tag 17 der eingelegten Mischkartusche 9 gibt eine bestimmte Farbe und Transluzenz vor, mit der die Mischkartusche 9 gefüllt werden soll.
2.) Die Menge an Fertigungsharz 10, die hergestellt werden soll, wird vom Benutzer eingegeben oder wird vom NFC-Tag 17 der Mischkartusche 9 vorgegeben (z.B. 100ml, 500ml, etc.). Alternativ kann die Menge aus einer Druckvorlage abgeleitet werden, die der Dosiervorrichtung übermittelt wird. Ein wesentlicher Vorteil dieser Offenbarung ist, dass damit genau nur die benötigte Menge des Fertigungsharzes hergestellt werden kann. Die Erfindung trägt somit auch zur Abfallvermeidung bei.
3.) Die ausgewählte oder vorgegebene Farbe und Transluzenz wird von der Recheneinheit in eine Dosierungsinformation für die Schlauchpumpen 4 und 8 umgerechnet. Diese Dosierungsinformation kann entweder die Zeit wie lange jede Pumpe aktiviert werden soll, oder, falls die Pumpen mit einem Schrittmotor angetrieben werden, die von einem Encoder gemessene Schrittanzahl enthalten. Die Dosierungsinformation dient einer Closed Loop Regelung/Steuerung der jeweiligen Fördereinrichtung/Pumpe als Vorgabe während der folgenden Schritte.
4.) Die große Schlauchpumpe 8 fördert eine berechnete Menge des transparenten Basisharzes 6 aus dem externen Behälter 7 in die Mischkartusche 9, zum Beispiel 400 ml. Das transparente Basisharz 6 fließt dabei durch den Dosierkopf 5 über eine große Öffnung in der Mitte Dosierkopfes in die Mischkartusche 9 ohne dabei aus den Farblöchern des Dosierkopfes 5 etwas zu fördern/mitzunehmen.
5.) Nun wird je nach gewählter Farbe die CMYK-Mischung dazu dosiert, indem jeweils eine berechnete Menge der farbigen Basisharze 3 durch die jeweiligen Farblöcher des Dosierkopfes 5 in die Mischkartusche 9 gefördert werden, welche damit beispielsweise auf insgesamt 500 ml aufgefüllt wird.
6.) Die geförderten Mengen der farbigen Basisharze (Zusatzmaterialien) können dabei von unterhalb des jeweiligen Behälters angeordneten internen Waagen 25 überwacht werden. Die Menge des insgesamt dosierten Fertigungsharzes (einschließlich des Basisharzes 6) kann zusätzlich mit einer internen Waage 26, welche sich unter der Mischkartusche 9 befindet, gemessen werden.

Alternativ zu den Schritten 4.) und 5.) kann auch abwechselnd farbiges Basisharz 3 und transparentes Basisharz 6 in die Mischkartusche 9 gefördert werden, wodurch die Durchmischung des Fertigungsharzes 10 gefördert wird.

Der Schritt 4 kann entfallen, wenn sich in der Mischkartusche 9 bereits eine definierte Menge des transparenten Basisharzes 6 befindet. Die Information, ob sich bereits Harz in der Mischkartusche 9 befindet bzw. wenn ja, wieviel, kann entweder auf den NFC-Tag 17 der Mischkartusche 9 gespeichert sein, oder von einer unter der Mischkartusche 9 befindlichen Waage 26 ermittelt werden.

Im Zusammenhang mit Schritt 2 können allenfalls auch Förderfehler detektiert werden, z.B. eine sprunghafte Erhöhung der Umdrehungen, wenn eine Farbkartusche 2 leer ist und daher Luft gefördert wird.

Über die NFC-Schnittstelle 15 können Informationen zu dem in die Mischkartusche 9 dosierten Basisharzen 3, 6, zu der Farbe und Transluzenz des hergestellten Fertigungsharzes 10, sowie Metadaten zum Dosiervorgang auf den NFC-Tag 17 der Mischkartusche 9 geschrieben werden.

Die Software 13 kann anhand eines Reaktivitätsmodelles für die verwendeten farbigen Basisharze 3 die Druckparameter, insbesondere die Belichtungszeit, für das hergestellte Fertigungsharz 10 berechnen. Diese berechneten Druckparameter können über die NFC-Schnittstelle 15 auf den NFC-Tag 17 der Mischkartusche 9 geschrieben werden. Das Reaktivitätsmodell wird mit Härtungsparametern der farbigen Basisharze 3 gespeist, indem die entsprechenden Daten durch die NFC-Schnittstellen 14 von den NFC-Tags 16 der Farbkartuschen 2 ausgelesen werden.

Zur Fertigung eines 3D-gedruckten Gegenstandes aus dem Fertigungsharz 10 wird die Mischkartusche 9 in einen 3D-Drucker eingesetzt und der Druck gestartet. Die zuvor in der Dosiervorrichtung 1 berechneten Druckparameter werden über den NFC-Tag 17 an den 3D-Drucker übermittelt. Umgekehrt kann alternativ auch der 3D-Drucker oder die CAM-Software (Computeraided manufacturing) die geforderten Druckparameter an die Dosiervorrichtung übermitteln.

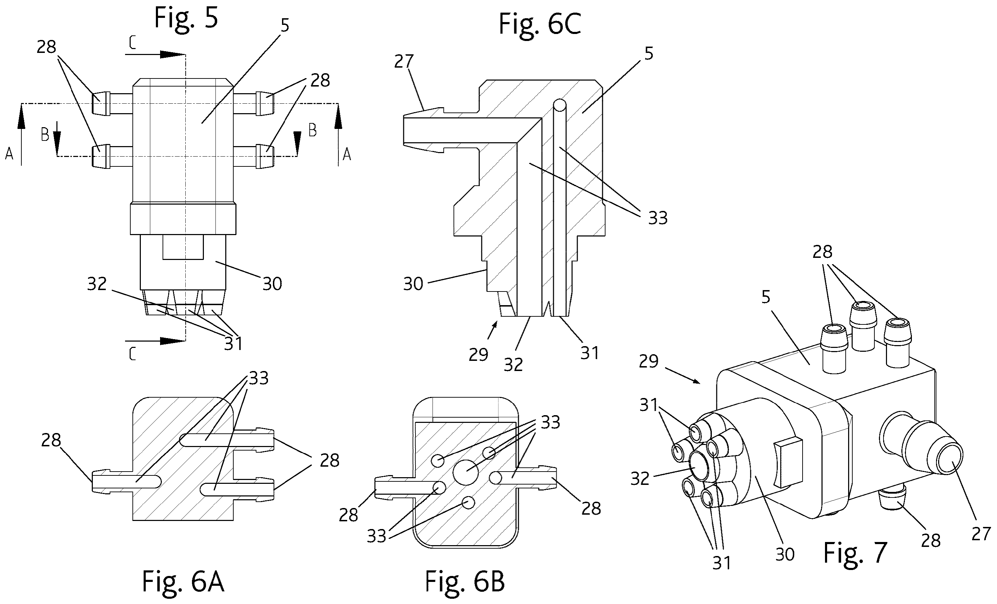

Der in den Figuren 5-7 genauer gezeigte Dosierkopf 5 weist einen Anschluss 27 für den Zulauf des Basisharzes 6 und fünf Anschlüsse 28 für den Zulauf verschiedener Zusatzmaterialien auf, z.B. der farbigen Basisharze 3 gemäß der vorangegangenen Ausführungsbeispiele. Diese Anschlüsse 27, 28 sind auf verschiedenen Seiten des Dosierkopfs 5 gestaffelt angeordnet, um mehrere Schlauchanschlüsse auf engem Raum zu ermöglichen. Zur Unterseite 29 weist der Dosierkopf 5 einen Ausgusssockel 30 mit sechs Ausgüssen 31, 32 auf, von denen fünf kleinere Ausgüsse 31 kreisförmig um einen größeren zentralen Ausguss 32 angeordnet sind. Die Ausgüsse 31, 32 sind jeweils mit einem Anschluss 27, 28 über Leitungen 33 verbunden und auf dem Ausgusssockel 30 angeordnet, der als Anschluss für die Mischkartusche 9 dient. Die Durchmesser der Ausgüsse 31, 32 sind von der Fördermenge, Viskosität und der erforderlichen Genauigkeit abhängig. Die Größe der Ausgüsse 31, 32 wird mit der Viskosität des Materials so abgestimmt, das der maximale Durchmesser verwendet wird, bei dem das Material tropffrei gefördert werden kann. Das Verhältnis der Durchmesser zwischen Basisharz-Ausguss 32 und Zusatzmaterial-Ausguss 31 leitet sich aus dem Förderverhältnis und der erforderlichen Genauigkeit ab.

## Patentansprüche

1. Dosierverfahren zur Vorbereitung eines farbigen Fertigungsharzes (10) aus einem Basisharz (6) und mindestens einem Zusatzmaterial, wobei das Fertigungsharz (10) und das Basisharz (6) Photoharze oder Komponenten von Photoharzen sind, wobei zumindest das mindestens eine Zusatzmaterial in einem ermittelten Verhältnis zu dem Basisharz (6) dosiert wird, wobei eine aus dem ermittelten Verhältnis zu einer ersten Menge des Basisharzes (6) abgeleitete zweite Menge des mindestens einen Zusatzmaterials abgegeben wird, wobei das ermittelte Verhältnis aus einer eingegebenen gewünschten Eigenschaft des prozessierten farbigen Fertigungsharzes (10) ermittelt wird, **dadurch gekennzeichnet, dass** die eingegebene gewünschte Eigenschaft die Farbe und/oder Transluzenz und/oder Transparenz des prozessierten farbigen Fertigungsharzes (10) ist.

2. Dosierverfahren nach Anspruch 1, **dadurch gekennzeichnet, dass** das Basisharz (6) ein zumindest teilweise transparentes Photoharz ist.

3. Dosierverfahren nach Anspruch 2, **dadurch gekennzeichnet, dass** das mindestens eine Zusatzmaterial mit dem Basisharz (6) in Kontakt gebracht wird.

4. Dosierverfahren nach Anspruch 2, **dadurch gekennzeichnet, dass** mindestens zwei verschiedene Zusatzmaterialien mit dem Basisharz (6) in Kontakt gebracht werden, wobei jedem der Zusatzmaterialien eine andere Farbe und/oder Transparenz und/oder Reaktivität und/oder Viskosität zugeordnet ist, die das Fertigungsharz (10) beeinflusst, und eine eigene Menge, die von dem jeweiligen Zusatzmaterial mit dem Basisharz (6) in Kontakt gebracht wird.

5. Dosierverfahren nach Anspruch 1, **dadurch gekennzeichnet, dass** dem Basisharz (6) und dem mindestens einen Zusatzmaterial jeweils eine andere Farbe und/oder Transparenz zugeordnet ist, die das Fertigungsharz (10) beeinflusst.

6. Dosierverfahren nach einem der Ansprüche 1 bis 5, **dadurch gekennzeichnet, dass** das mindestens eine Zusatzmaterial ein Photoharz oder eine Komponente eines Photoharzes ist.

7. Dosierverfahren nach Anspruch 6, **dadurch gekennzeichnet, dass** die Härtungsparameter des Basisharzes (6) und des mindestens einen Zusatzmaterials, gemessen anhand der kritischen Energie (Ec) und der Penetrationstiefe (Dp) bei einer vordefinierten Expositionszeit mit vordefinierter Bestrahlungsstärke und vordefiniertem Lichtspektrum, um weniger als 30%, insbesondere weniger als 10%, vorzugsweise weniger als 1%, voneinander abweichen.

8. Dosierverfahren nach einem der Ansprüche 1 bis 7, **dadurch gekennzeichnet, dass** das Basisharz (6) und das mindestens eine Zusatzmaterial zumindest einmalig in einem Kontaktbehälter in Kontakt gebracht werden, wobei das mindestens eine Zusatzmaterial und/oder das Basisharz (6) von einer jeweils zugeordneten steuerbaren Fördereinrichtung in den Kontaktbehälter gefördert wird, wobei die steuerbaren Fördereinrichtungen getrennt angesteuert werden, in Abhängigkeit von einem momentanen Verhältnis.

9. Dosierverfahren nach einem der Ansprüche 1 bis 8, **dadurch gekennzeichnet, dass** die Menge an eingesetztem Basisharz (6) und/oder die Menge an eingesetztem mindestens einen Zusatzmaterial mit einem Sensor, insbesondere mit einer Waage und/oder einer Kamera, überwacht wird.

10. Dosiervorrichtung (1) zur Herstellung eines farbigen Fertigungsharzes (10), mit mindestens einer Steuerung und zumindest einer von der Steuerung gesteuerten Fördereinrichtung, wobei die Fördereinrichtung mit zumindest einem Anschluss für einen Basisharzbehälter verbunden und eingerichtet ist, das darin enthaltene Photoharz oder die darin enthaltene Komponente eines Photoharzes zu mindestens einem Auslass zu fördern, der zur Mündung in einen Dosierbehälter vorgesehen ist, wobei die Steuerung eingerichtet ist, die Fördereinrichtung zur Förderung einer einem ermittelten Verhältnis eines Basisharzes (6) und mindestens eines Zusatzmaterials entsprechenden Menge anzusteuern, **dadurch gekennzeichnet, dass** die Steuerung eingerichtet ist, das ermittelte Verhältnis aus einer eingegebenen gewünschten Eigenschaft des prozessierten farbigen Fertigungsharzes (10) zu ermitteln, wobei die eingegebene gewünschte Eigenschaft die Farbe und/oder Transluzenz und/oder Transparenz des prozessierten farbigen Fertigungsharzes (10) ist.

11. Dosiervorrichtung (1) nach Anspruch 10, **gekennzeichnet durch** mindestens eine weitere von der Steuerung gesteuerte Fördereinrichtung, wobei die weitere Fördereinrichtung mit einem Anschluss für einen Zusatzmaterialbehälter verbunden und eingerichtet ist, das darin enthaltene Zusatzmaterial zu dem Auslass oder zu einem weiteren Auslass zu fördern, der zur Mündung in den Dosierbehälter vorgesehen ist, wobei die Steuerung eingerichtet ist, die weitere Fördereinrichtung zur Förderung einer dem ermittelten Verhältnis entsprechenden Menge anzusteuern.

12. Dosiervorrichtung (1) nach Anspruch 10 oder 11, **gekennzeichnet durch** eine Messeinheit, die mit der Steuerung verbunden und eingerichtet ist, die geförderte Materialmenge zu ermitteln und die ermittelte Materialmenge an die Steuerung zu übermitteln, wobei die Steuerung eingerichtet ist, die Fördereinrichtung in Abhängigkeit von der übermittelten Materialmenge zu steuern.

13. Dosiervorrichtung (1) nach einem der Ansprüche 10 bis 12, **gekennzeichnet durch** eine elektronische Schnittstelle zur Übermittlung von Daten zu dem Basisharz (6), dem mindestens einen Zusatzmaterial, Farbe, Eigenschaften, Zulassung, Zeit-Informationen oder des damit erzeugten Produkts sowie entsprechende Metadaten, wobei die elektronische Schnittstelle mit der Steuerung verbunden ist und die Steuerung eingerichtet ist, die über die elektronische Schnittstelle empfangenen Daten zu dem Basisharz (6) und optional zu dem mindestens einen Zusatzmaterial beim Ansteuern der Fördereinrichtung zu berücksichtigen und/oder daraus abgeleitete Daten zu dem Fertigungsharz (10) über die elektronische Schnittstelle bereitzustellen.

14. Dosiervorrichtung (1) nach einem der Ansprüche 10 bis 12, **gekennzeichnet durch** ein Schreib-/Lesegerät für kontaktlos programmierbare und kontaktlos auslesbare Etiketten (NFC) zur Übermittlung von Daten zum Basisharz (6) und/oder zum mindestens einen Zusatzmaterial und/oder zu dem damit herstellbaren Fertigungsharz (10).

15. Dosiervorrichtung (1) nach einem der Ansprüche 13 oder 14, **gekennzeichnet durch** eine Schnittstelle zur Übertragung von Daten über das herstellbare Fertigungsharz (10) gemäß den definierten technischen Möglichkeiten in den Ansprüchen 13 und 14 mit dem Zweck, den weiteren Verarbeitungsprozess des Fertigungsharzes (10) zu parametrisieren.
